(19) Europäisches Patentamt
European Patent Office
Office européen des brevets

(11) **EP 0 986 093 B1**

(12) **EUROPÄISCHE PATENTSCHRIFT**

(45) Veröffentlichungstag und Bekanntmachung des Hinweises auf die Patenterteilung:
**24.08.2011 Patentblatt 2011/34**

(51) Int Cl.:
*H01K 1/32* (2006.01)          *H01J 61/40* (2006.01)
*G02B 5/28* (2006.01)

(21) Anmeldenummer: **99111407.5**

(22) Anmeldetag: **11.06.1999**

(54) **Glühlampe**

Incandescent lamp

Lampe à incandescence

(84) Benannte Vertragsstaaten:
**BE DE ES FR GB IT NL SE**

(30) Priorität: **10.09.1998 DE 19841304**

(43) Veröffentlichungstag der Anmeldung:
**15.03.2000 Patentblatt 2000/11**

(73) Patentinhaber: **OSRAM Gesellschaft mit beschränkter Haftung
81543 München (DE)**

(72) Erfinder:
• **Bodmer, Albert Dr.
81243 München (DE)**
• **Schäfer, Reinhard
89522 Heidenheim (DE)**
• **Enders, Martin Dr.
81545 München (DE)**

(56) Entgegenhaltungen:
**EP-A- 0 460 913    FR-A- 2 626 981**

EP 0 986 093 B1

**Beschreibung**

1. Technisches Gebiet

Die Erfindung betrifft insbesondere Glühlampen, die farbiges Licht erzeugen und die beispielsweise als Lichtquelle in einem Kraftfahrzeug verwendet werden. Im Handel sind Kraftfahrzeugscheinwerferlampen mit einem zylindrischen Lampenkolben und einer oder zwei axial darin angeordneten Glühwendeln zur Erzeugung des Abblend- und Fernlichtes im Kraftfahrzeug erhältlich, die im Bereich der Glühwendeln auf dem Lampenkolben eine Interferenzbeschichtung aufweisen, wobei diese Interferenzfilterbeschichtung entweder zur Erniedrigung oder Anhebung der Farbtemperatur des weißen Lichtes dient. Im ersten Fall emittiert die Lampe weißes Licht mit gelblicher Einfärbung und im zweiten Fall weißes Licht bläulicher Tönung. Es ist bekannt, dass die Wellenlänge des von der Interferenzfilterbeschichtung transmittierten Lichtes nicht nur von dem Aufbau des Interferenzfilters, sondern auch von dem Einfallswinkel des Lichtes auf das Interferenzfilter abhängt. Bei den Kraftfahrzeugscheinwerferlampen spielt die Abhängigkeit von dem Einfallswinkel aufgrund der Zylindersymmetrie des Lampenkolbens und der axialen Anordnung der Glühwendeln allerdings nur eine untergeordnete Rolle.

Im Unterschied dazu besitzen Glühlampen, die im Fahrzeug zur Erzeugung von Bremslicht und Blinklicht verwendet werden, üblicherweise einen rotationssymmetrischen, birnenförmigen Lampenkolben und eine quer zur Lampenachse ausgerichtete Glühwendel. Die rote oder orange Lichtfarbe wird hier entweder mittels farbiger Filter in der Leuchte oder mittels eingefärbter Kunststoffstreuscheiben oder mittels eines mit einem Cadmiumzusatz eingefärbten Glasgefäßes oder mit Hilfe einer farbigen Lackschicht auf dem Lampengefäß erzeugt. Farbige Filter in der Leuchte erhöhen die System- und Montagekosten. Eingefärbte Kunststoffstreuscheiben erschweren das sortenreine Recycling von Altfahrzeugen und verursachen unerwünschte Farbabweichungen für den Karosseriedesigner. Ein Cadmiumzusatz zum Glasgefäß ist ebenfalls nicht unproblematisch, da Cadmium ein Schwermetallgift ist. Glühlampen mit lackiertem Lampenkolben besitzen wegen der hohen thermischen Belastung der Lackschicht eine zu geringe Lebensdauer. Außerdem entsteht bei einem eingefärbten oder lackierten Lampengefäß sogenanntes Phantomlicht, das durch Reflektion von Sonnenlicht an dem Reflektor, in den die Lampe eingesetzt ist, verursacht wird und das eine Signalfunktion vortäuscht.

II. Stand der Technik

Eine dem Oberbegriff des Patentanspruchs 1 entsprechende Glühlampe ist beispielsweise in der Offenlegungsschrift EP 0 460 913 offenbart. Diese Schrift beschreibt eine Beleuchtungsvorrichtung bestehend aus einem Reflektor und einer Glühlampe mit einem im wesentlichen zylindrischen Lampenkolben. Dieses Beleuchtungssystem erzeugt weißes Licht einer vergleichsweise hohen Farbtemperatur von ungefähr 3050 bis 3600 Kelvin. Der Lampenkolben der Glühlampe weist ein erstes Interferenzfilter auf, das für sichtbares Licht eines bestimmten Wellenlängenbereiches durchlässig ist, während der Reflektor ein zweites Interferenzfilter aufweist, das für Infrarotstrahlung transparent ist und sichtbares Licht reflektiert. Beide Interferenzfilter besitzen eine lokal unterschiedliche Schichtdicke, um ringförmige, farbige Lichtmuster auf der beleuchteten Objektoberfläche zu vermeiden.

Die Druckschrift FR 2 626 981, beschreibt Vorteile von der Kombination von Interferenzfiltern und Absorptionsfiltern im Allgemeinen.

Das deutsche Gebrauchsmuster G 86 00 642.3 beschreibt eine gefärbte Halogenglühlampe. Bei dieser Glühlampe handelt es sich um eine sogenannte H4-Kfz-Lampe, die gelbliches Licht emittiert. Die Lampe besitzt einen im wesentlichen zylindrischen Lampenkolben und zwei axial innerhalb des Lampenkolbens angeordnete Glühwendeln. Die Kuppe des Lampenkolbens ist mit einer lichtundurchlässigen, schwarzen Beschichtung versehen, während der zylindrische Teil des Lampenkolbens mit einem für gelbes Licht durchlässigen Interferenzfilter beschichtet ist.

III. Darstellung der Erfindung

Es ist die Aufgabe der Erfindung, eine Glühlampe bereitzustellen, die als Signallampe, insbesondere für Kraftfahrzeuge, geeignet ist und die die obengenannten Nachteile des Standes der Technik vermeidet.

Diese Aufgabe wird erfindungsgemäß durch die Merkmale des Patentanspruchs 1 gelöst. Eine besonders vorteilhafte Ausführung der Erfindung ist im Unteranspruch 2 Beschreiben.

Die erfindungsgemäße Glühlampe weist ein lichtdurchlässiges Lampengefäß, eine von dem Lampengefäß umschlossene Glühwendel und ein Interferenzfilter auf, das als Beschichtung mit lokal unterschiedlicher Schichtdicke auf dem Lampengefäß angeordnet ist, wobei das Interferenzfilter für Licht eines ersten vorgegebenen Wellenlängenbereiches eine geringe Transparenz und für Licht eines zweiten vorgegebenen Wellenlängenbereiches eine hohe Transparenz besitzt, und wobei das Interferenzfilter einen Übergangsbereich aufweist, der den ersten und zweiten Wellenlängenbereich voneinander trennt. Erfindungsgemäß ist die Interferenzfilterbeschichtung zum Beispiel derart ausgeführt, dass für zwei beliebige, interferenzfilterbeschichtete Orte P1, P2 auf dem Lampengefäß für die Gesamtschichtdicke d1, d2 des Interferenzfilters an diesen Orten P1, P2 näherungsweise folgende Beziehung erfüllt ist:

$$\frac{d2}{d1} = \frac{\lambda(\alpha 1)}{\lambda(\alpha 2)} \qquad (F1)$$

Darin bezeichnet $\lambda(\alpha 1)$ diejenige Wellenlänge aus dem Übergangsbereich des Interferenzfilters für den Einfallswinkel $\alpha 1$ und vorgegebener Gesamtschichtdicke d1 des Interferenzfilters, bei der der Transmissionskoeffizient des Interferenzfilters einen vorbestimmten Wert T besitzt, und $\lambda(\alpha 2)$ ist diejenige Wellenlänge aus dem Übergangsbereich des Interferenzfilters für den Einfallswinkel $\alpha 2$ und gleicher Schichtdicke d1 des Interferenzfilters, bei der der Transmissionskoeffizient des Interferenzfilters den vorbestimmten Wert T besitzt. Der Einfallswinkel $\alpha 1$ bzw. $\alpha 2$ ist dabei durch den Winkel bestimmt, den die Verbindungsstrecke zwischen dem Ort P1 bzw. P2 und dem Zentrum der Glühwendel mit der Normalen auf das Lampengefäß im Punkt P1 bzw. P2 einschließt. Die Glühwendel wird hier vereinfachend als punktförmig angesehen. Dadurch kann jedem Ort auf dem Lampengefäß in eindeutiger Weise ein Einfallswinkel zugeordnet werden.

Vorteilhafterweise wird für den vorbestimmten Wert T des Transmissionskoeffizienten ein Wert aus dem Wertebereich von 0,4 bis 0,5 und vorzugsweise der Wert 0,5 oder derjenige Wert, bei der die Transmission die Hälfte des maximalen Transmissionswertes beträgt, gewählt. Die dazu gehörenden Wellenlängen liegen im Übergangsbereich des Interferenzfilters. Insbesondere kann die zum Wert T=0,5 oder die zur Hälfte des maximalen Transmissionswertes gehörende Wellenlänge als Kante des Interferenzfilters angesehen werden, die den Wellenlängenbereich geringer Transparenz von dem Wellenlängenbereich hoher Transparenz trennt. Bei dem Interferenzfilter handelt es sich um ein sogenanntes Kantenfilter, dessen Filterkante die Spektralbereiche geringer und hoher Transparenz voneinander separiert. Der Übergangsbereich bzw. die Kante des Interferenzfilters der erfindungsgemäßen Glühlampe liegt vorteilhafterweise im Spektralbereich des grünen Lichts, so daß vom Interferenzfilter vornehmlich Licht der Farben grün, gelb und rot transmittiert wird. Bei der Erfindung liegt der Übergangsbereich des Interferenzfilters in einem Wellenlängenbereich von 520 nm bis 570 nm. Dadurch emittiert die Glühlampe orangefarbenes Licht. Sie lässt sich daher vorteilhafterweise als Lichtquelle für eine Signalleuchte, insbesondere für die Blinklichtleuchte im Kraftfahrzeug verwenden. Außerdem weist die Glühlampe erfindungsgemäß mindestens eine $Fe_2O_3$-Absorberschicht auf. Die vorgenannte Eisenoxid-Absorberschicht absorbiert kurzwelliges Licht im blauen und violetten Spektralbereich und vermindert die Winkelabhängigkeit der Transmission des Interferenzfilters.

Aus fertigungstechnischen Gründen werden die Schichtdicken $d1_i$, $d2_i$ der einzelnen Schichten des Interferenzfilters an den Orten P1, P2, das heißt, die Schichtdicken der optisch niedrigbrechenden und optisch hochbrechenden Schichten des Interferenzfilters an den Orten P1, P2, vorteilhafterweise im Verhältnis der Gesamtschichtdicke d1, d2 des Interferenzfilters an diesen Orten P1, P2 variiert. Für die Schichtdicken $d1_i$, $d2_i$ der einzelnen Schichten des Interferenzfilters ist dann näherungsweise folgende Beziehung erfüllt:

$$\frac{d2_i}{d1_i} = \frac{d2}{d1} \qquad (F2)$$

Darin durchläuft der Index i alle einzelnen Schichten des Interferenzfilters.

Es ist nicht unbedingt erforderlich, alle Einzelschichten $d1_i$, $d2_i$ des Interferenzfilters an den Orten P1, P2 im Verhältnis der Gesamtschichtdicke d1, d2 an diesen Orten P1, P2 zu variieren. Vorteilhafterweise werden je eine optisch niedrigbrechende und eine angrenzende optisch hochbrechende Schicht des Interferenzfilters zu einem Paar zusarnmengefasst, wobei für die Schichtdicken $d1_{L,i}$, $d2_{L,i}$ der optisch niedrigbrechenden Schicht an den Orten P1, P2 und für die Schichtdicken $d1_{H,i+1}$, $d2_{H,i+1}$ der angrenzenden optisch hochbrechenden Schicht eines solchen Paares an diesen Orten P1, P2 näherungsweise folgende Beziehung erfüllt ist:

$$\frac{d2_{L,i} + d2_{H,i+1}}{d1_{L,i} + d1_{H,i+1}} \;=\; \frac{d2}{d1} \qquad \text{(F3)}$$

Darin durchläuft der Index i die optisch niedrigbrechenden Schichten des Interferenzfilters. Die vorstehende Formel berücksichtigt vor allem den sogenannten "Mismatch-Effekt" bei zwei benachbarten Schichten - das heißt, bei einer optisch niedrigbrechenden und einer angrenzenden optisch hochbrechenden Schicht - des Interferenzfilters. Unter Mismatch-Effekt versteht man die Zunahme der Schichtdicke der optisch niedrigbrechenden bzw. der optisch hochbrechenden Schicht auf Kosten der anderen, benachbarten Schicht, so daß die Summe beider Schichtdicken unverändert bleibt. Die Lage der Kante der Transmissionskurve des Interferenzfilters wird durch den Mismatch-Effekt nicht beeinflußt.

Durch die oben beschriebene erfindungsgemäße Variation der Schichtdicke der Interferenzfilterbeschichtung auf dem Lampengefäß wird gewährleistet, daß für das menschliche Auge von allen, durch die Glühwendel beleuchteten, interferenzfilterbeschichteten Bereichen des Lampengefäßes Licht eines einheitlichen Farbtones bzw. Licht derselben Farbzusammensetzung ausgesandt wird. Die Erfindung ermöglicht es, die Erzeugung farbigen Lichtes mittels einer Interferenzfilterbeschichtung des Lampengefäßes auf Glühlampen mit beliebiger Lampengefäßgeometrie und Wendelanordnung anzuwenden. Insbesondere ermöglicht die Erfindung die Erzeugung orangefarbenen oder roten Lichtes mittels einer Interferenzfilterbeschichtung auf dem birnenförmigen Lampengefäß von Glühlampen, die in den Blinklichtleuchten oder Bremslichtleuchten von Fahrzeugen eingesetzt werden. Dadurch können in den vorgenannten Leuchten die entsprechenden Farbfilter eingespart werden. Außerdem kann auf die Verwendung von Glühlampen mit farbig lackiertem Lampengefäß verzichtet werden. Die erfindungsgemäße Interferenzfilterbeschichtung auf dem Lampengefäß ist thermisch hoch belastbar und kratzfest. Daher besitzen die erfindungsgemäßen Glühlampen eine längere Lebensdauer als die vorgenannten lackierten Glühlampen.

IV. <u>Beschreibung des bevorzugten Ausführungsbeispiels</u>

Nachstehend wird die Erfindung anhand eines bevorzugten Ausführungsbeispiels näher erläutert. Es zeigen:

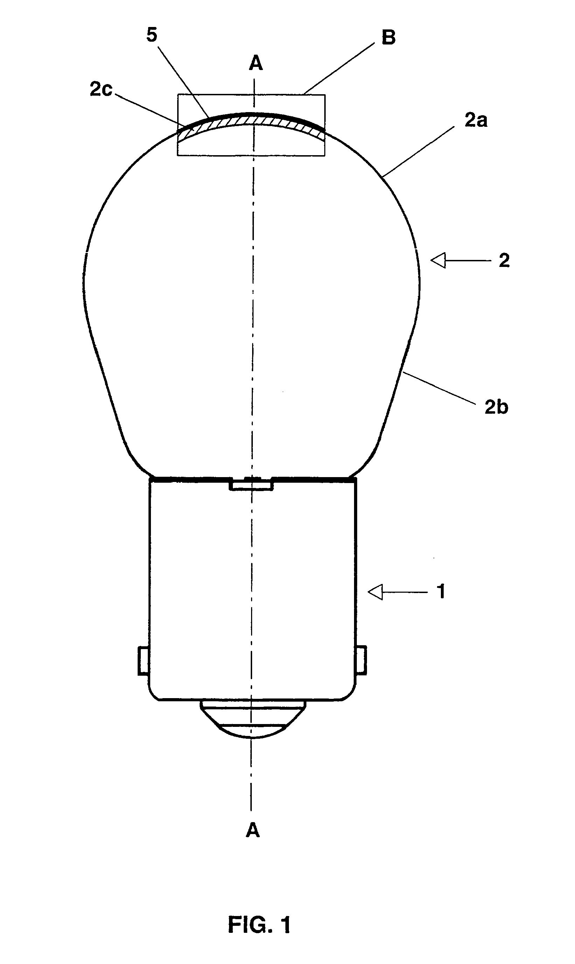

Figur 1     eine Seitenansicht einer Glühlampe gemäß des bevorzugten Aus- führungsbeispiels der Erfindung

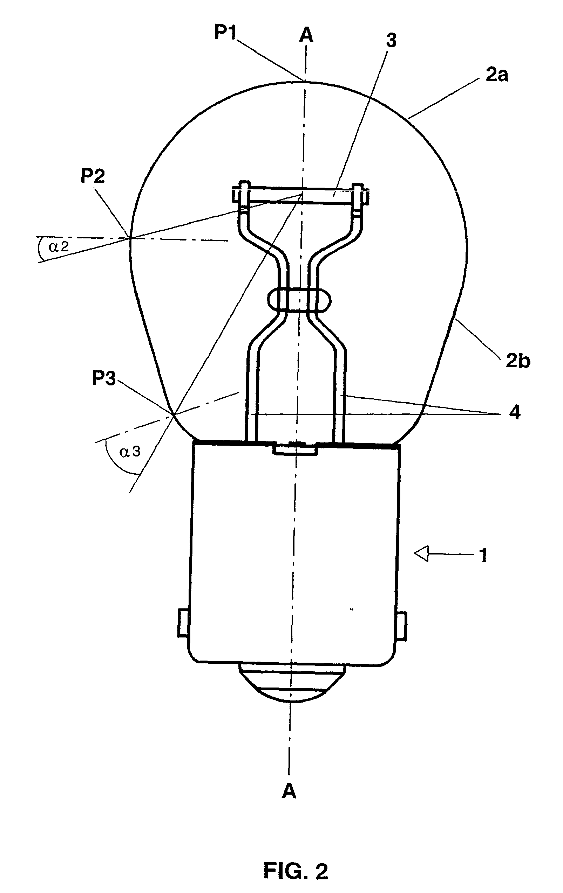

Figur 2     eine Seitenansicht der Glühlampe gemäß Figur 1 in teilweise ge- schnittener, schematischer Darstellung

Figur 3     Transmissionskurven der Interferenzfilterbeschichtung des Lam- pengefäßes für drei unterschiedliche Einfallswinkel und konstante Schichtdicken des Interferenzfilters

Figur 4     Transmissionskurven der Interferenzfilterbeschichtung des Lam- pengefäßes der Glühlampe gemäß des bevorzugten Ausführungs- beispiels der Erfindung für drei unterschiedliche Einfallswinkel und entsprechend angepaßte Schichtdicken des Interferenzfilters

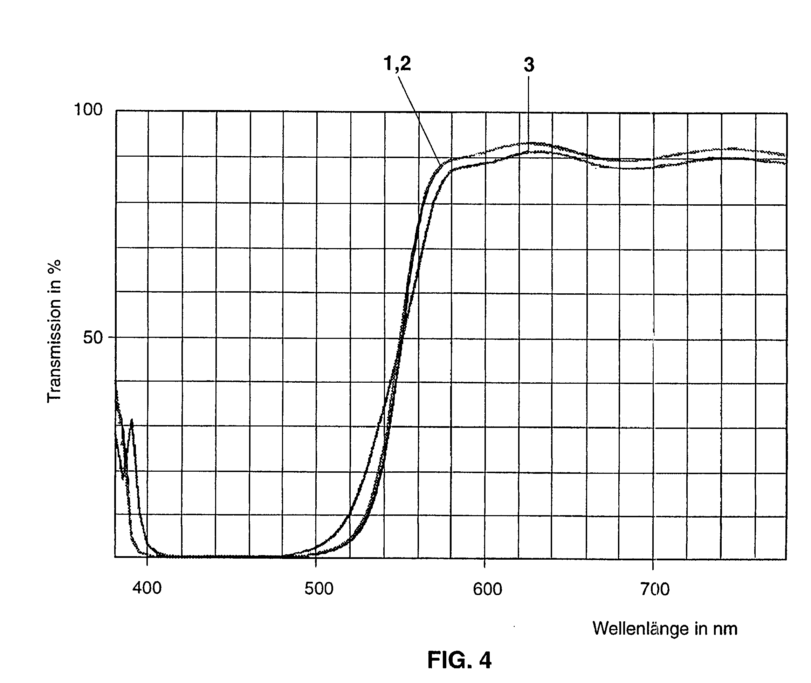

Bei dem bevorzugten Ausführungsbeispiel der Erfindung handelt es sich um eine Glühlampe mit einer elektrischen Leistungsaufnahme von ca. 25 W, die beispielsweise als Lichtquelle in der Blinklichtleuchte eines Kraftfahrzeuges verwendet wird. Diese Glühlampe besitzt einen bajonettartigen Lampensokkel 1, ein um die Lampenachse A-A rotationssymmetrisches, birnenförmiges Lampengefäß 2 aus Glas 2c und eine Glühwendel 3 sowie zwei Stromzuführungen 4 für die Glühwendel 3. Das Lampengefäß 2 weist einen verdickten Bereich 2a von nahezu sphärischer Symmetrie und einen verjüngten Bereich 2b auf, wobei die Glühwendel 3 von dem verdickten Bereich 2a umschlossen ist und der verjüngte Bereich 2b im Lampensockel 1 verankert ist. Die gesamte äußere Oberfläche des Lampengefäßes 2 ist mit einer Interferenzfilterbeschichtung 5 versehen, das mehrere optisch niedrigbrechende und optisch hochbrechende Schichten aufweist. Die Gesamtschichtdicke des Interferenzfilters nimmt, ausgehend von einem minimalen Wert $d_{min}$ bei der Lampengefäßkuppe P1, entlang der kürzesten Verbindungslinie auf dem Lampengefäß 2 in Richtung des sokkelnahen Ortes P3 auf einen maximalen Wert $d_{max}$ stetig zu. Das Verhältnis $d_{max}/d_{min}$ beträgt bei dem bevorzugten Ausführungsbeispiel ungefähr 1,07. Das Interferenzfilter 5 besitzt eine hohe Transmission für den Spektralbereich des roten, gelben und grünes Lichtes und eine geringe Transmission im Spektralbereich des blauen und violetten Lichtes. Der Übergang vom Bereich geringer zu hoher Transmission liegt im Spektralbereich des grünen Lichts. Die Kante des Interferenzfilters 5, das heißt die Wellenlänge, bei der die Transmission des Interferenzfilters 5 fünfzig Prozent des einfallenden Lichtes beträgt, liegt gemäß Figur 4 bei ca. 550 nm. Die Glühlampe emittiert daher im eingeschalteten Zustand orangefarbenes Licht. Der Farbort des von der Glühlampe emittierten Lichtes liegt gemäß Normfarbtafel nach DIN 5033 innerhalb eines Bereiches, der durch die folgenden drei Ungleichungen für die Farbortkoordinaten bzw. die Normfarbwertanteile x, y, abgegrenzt ist:

$$y \geq -x + 0,993; \qquad\qquad y \geq 0,398;$$

$$y \leq 0,420$$

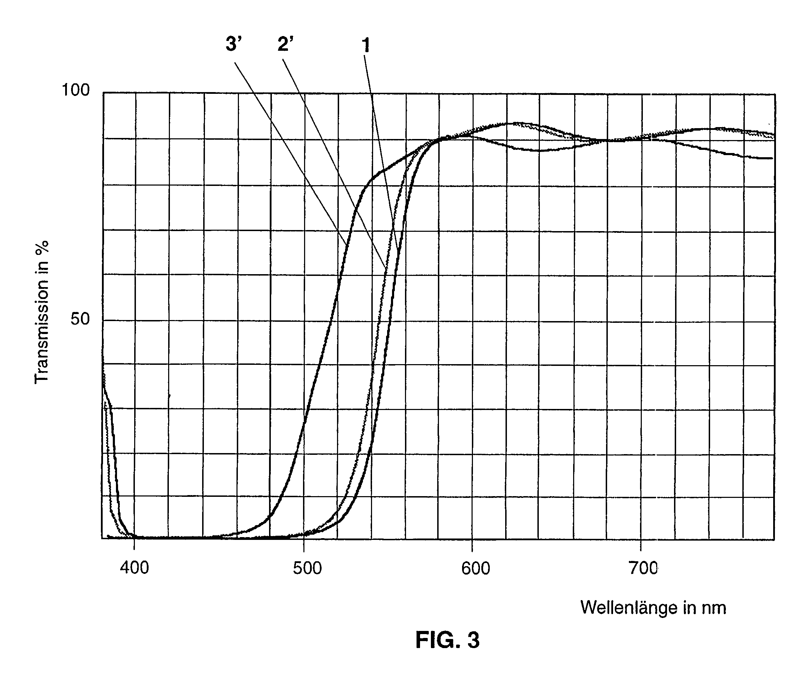

Die Interferenzfilterbeschichtung 5 besteht aus insgesamt sechzehn einzelnen Schichten, wobei die erste, unmittelbar auf dem Lampengefäß 2 aufgebrachte Schicht eine $Fe_2O_3$-Absorberschicht ist, die vornehmlich Licht aus dem blauen und violetten Spektralbereich absorbiert. Die nachfolgenden 15 Schichten bestehen aus abwechselnd optisch niedrigbrechenden und optisch hochbrechenden Schichten. Bei den optisch niedrigbrechenden Schichten handelt es sich um $SiO_2$-Schichten mit einem Brechungsindex von 1,46 und bei den optisch hochbrechenden Schichten um $TiO_2$-Schichten mit einem Brechungsindex von 2,4. Wie bereits weiter oben beschrieben, variiert die Schichtdicke $SiO_2$-Schichten und der $TiO_2$-Schichten und damit auch die gesamte Schichtdicke der Interferenzfilterbeschichtung 5 in Abhängigkeit des Einfallswinkels des auf das Interferenzfilter 5 auftreffenden, von der Glühwendel 3 emittierten Lichts. An der Kuppe P1 des Lampengefäßes 2 weisen die $SiO_2$-Schichten und die $TiO_2$-Schichten des Interferenzfilters 5 die geringste Schichtdicke und in der Nähe des Sockels 1 die höchste Schichtdicke auf. Die Orte konstanter Schichtdicke des Interferenzfilters 5 auf dem Lampengefäß 2 befinden sich auf konzentrischen Kreisringen um die Lampenachse A-A. Die Tabellen 1 bis 3 geben die Werte für die gesamte Schichtdicke des Interferenzfilters 5 und für die Schichtdicke der einzelnen Schichten des Interferenzfilters 5 für drei exemplarisch ausgewählte Orte P1, P2 bzw. P3 auf dem Lampengefäß 2 an. Die Schichtdickenangaben in den Tabellen 1 bis 3 besitzen eine Genauigkeit von ungefähr $\pm 3\%$. Aufgrund der Toleranzen bei den Schichtdickenangaben und bei der Bestimmung der Kante der Transmissionskurven des Interferenzfilters sind die angegebenen Beziehungen F1, F2, F3 nur näherungsweise erfüllt. In Figur 4 sind die zu diesen Orten P1, P2 und P3 gehörenden Transmissionskurven 1, 2, 3 des Interferenzfilters 5 abgebildet. Die Figur 3 zeigt im Vergleich die Transmissionskurven 1, 2', 3' für eine Interferenzfilterbeschichtung mit konstanter Schichtdicke und für die den Orten P1, P2 bzw. P3 entsprechenden Einfallswinkel $\alpha 1$, $\alpha 2$ bzw. $\alpha 3$. In Figur 3 liegen die Filterkanten der Transmissionskurven 1, 2' bzw. 3' bei den Wellenlängen 550 nm, 543 nm bzw. 513 nm.

Bei der Ermittlung der Schichtdickenvariation gemäß der Tabellen 2 und 3 wird von der vereinfachenden Annahme ausgegangen, daß die Glühwendel 3 punktförmig ist, das heißt, daß die Lichtemission vom Zentrum der Glühwendel 3 ausgeht. In diesem Fall kann jedem Ort P1, P2, P3 etc. auf dem Lampengefäß 2 in eindeutiger Weise ein Einfallswinkel $\alpha 1$, $\alpha 2$, $\alpha 3$ etc. zugeordnet werden, unter dem das von der Glühwendel 3 emittierte Licht auf die innere Oberfläche des Lampengefäßes 2 und - bei Vernachlässigung der Brechung in dem Glas 2c des Lampengefäßes - auf das Interferenzfilter 5 auftrifft. Figur 3 zeigt, daß sich die Lage der Kante des Interferenzfilters 5 mit zunehmendem Einfallswinkel $\alpha$ zu kürzeren Wellenlängen verschiebt. Die Transmissionskurve 1 entspricht einem Einfallswinkel $\alpha 1 = 0$ Grad, das heißt, senkrechtem Lichteinfall (der Einfallswinkel wird gegen das Lot bzw. gegen die Normale auf die Lampengefäßwand gemessen), wie er an der Lampengefäßkuppe P1 vorliegt. Die Transmissionskurve 2' entspricht, bei gleichbleibenden Schichtdicken des Interferenzfilters, einem Einfallswinkel $\alpha 2 = 17$ Grad, wie er am Lampengefäßäquator am Ort P2 vorliegt. Die Transmissionskurve 3' entspricht, bei gleichbleibenden Schichtdicken des Interferenzfilters, einem Einfallswinkel $\alpha 3 = 45$ Grad, wie er am verjüngten Bereich 2b des Lampengefäßes 2 in sockelnähe am Ort P3 vorliegt. Gegenüber der Kante der Transmisionskurve 1 ist die Lage der Kanten der Transmissionskurve 2' bzw. 3' um 1,3% bzw. 7,2% auf der Wellenlängenskala zu kürzeren Wellenlängen verschoben. Da die maximale Transmission des Interferenzfilters nur ungefähr 90% statt 100% beträgt wurde zur Bestimmung der Kante des Interferenzfilters 5 nicht die zum Transmissionswert von 50% gehörende Wellenlänge herangezogen, sondern statt dessen die zum Transmissionswert von 45% gehörende Wellenlänge bevorzugt. Damit von allen Bereichen des Lampengefäßes 2 Licht einer einheitlichen Farbkomposition emittiert wird, muß die Kante des Interferenzfilters 5 für alle Orte P1, P2, P3 etc. des Lampenkolbens 2 und die entsprechenden zugeordneten Einfallswinkel $\alpha 1$, $\alpha 2$, $\alpha 3$ etc. im wesentlichen bei derselben Wellenlänge liegen. In Figur 4 sind die zu den in den Tabellen 1 bis 3 angegebenen Schichtdicken gehörenden Transmissionskurven 1, 2, 3 der Interferenzfilterbeschichtung 5 für die Orte P1, P2, P3 und die entsprechenden Einfallswinkel $\alpha 1$, $\alpha 2$, $\alpha 3$ exemplarisch dargestellt. Die Kurven 1 und 2 sind nahezu identisch und daher in Figur 4 kaum voneinander zu unterscheiden. Die Kante des Interferenzfilters 5 liegt für die drei Einfallswinkel $\alpha 1$, $\alpha 2$, $\alpha 3$ bei derselben Wellenlänge von ungefähr 550 nm. Die Schichtdicken des Interferenzfilters 5 an dem Ort P2 bzw. P3 sind um ca. 1,2% bis 1,3% bzw. 7,1% bis 7,2% größer als die Schichtdicken an der Lampengefäßkuppe P1. Für jeden Ort P auf dem Lampengefäß 2 und den zugeordneten Einfallswinkel $\alpha$ kann die Zunahme der Schichtdicken an diesem Ort P gegenüber den Schichtdicken an der Lampengefäßkuppe P1 aus der Verschiebung der Kante der Transmissionskurven des Interferenzfilters für die Einfallswinkel $\alpha$ und 0 Grad bei gleichbleibenden Schichtdikken ermittelt werden. Die Gleichung auf Seite 4 beschreibt diesen Zusammenhang und erlaubt für eine beliebige Lampengefäßgeometrie die Ermittlung der Schichtdickenvariation des Interferenzfilters aus den entsprechenden Transmissionskurven, wenn die Schichtdicken des Interferenzfilters an einem Ort des Lampengefäßes vorgegeben sind. Aus fertigungstechnischen Gründen wird die Schichtdicke der $Fe_2O_3$-Absorberschicht ebenfalls lokal variiert, obwohl das nicht erforderlich ist. Falls die Schichtdicke der $Fe_2O_3$-Absorberschicht nicht lokal variiert wird, bleibt die Dicke dieser Absorberschicht bei der Ermittlung der Gesamt- und Einzelschichtdicken des Interferenzfilters unberücksichtigt.

Die Interferenzfilterbeschichtung 5 der erfindungsgemäßen Glühlampe wird bei dem bevorzugten Ausführungsbeispiel mit Hilfe von Sputterprozessen erzeugt. Die Schichtdicke wird über die Zeitdauer des Sputterprozesse und die zum Sputtern verwendete elektrische Spannung sowie mit Hilfe von Blenden gesteuert.

Die Erfindung beschränkt sich nicht auf das oben näher erläuterte Ausführungsbeispiel. Beispielsweise kann die Erfindung auf Glühlampen mit beliebiger Lampengefäßgeometrie und beliebiger Anordnung der Glühwendel angewendet werden. Außerdem kann die Erfindung auch auf Interferenzfilter mit beliebigem Schichtendesign und beliebiger Anzahl von optisch niedrig- und hochbrechenden Einzelschichten angewendet werden. Außerdem können für die optisch niedrigbrechenden und hochbrechenden Schichten auch andere Materialien als $SiO_2$ und $TiO_2$ verwendet werden. Ferner beschränkt sich die Anwendung der Erfindung nicht auf Interferenzfilter, deren Transmissionskurve eine Kante im grünen Spektralbereich besitzen. Wird beispielsweise eine Glühlampe gewünscht,die rotes Licht emittiert, so kann statt des oben beim bevorzugten Ausführungsbeispiel beschriebenen Interferenzfilters 5 ein Interferenzfilter verwendet werden, dessen Transmissionskurve eine Kante bei einer Wellenlänge von z.B. 590 nm oder 600 nm aufweist. Das Interferenzfilter der erfindungsgemäßen Glühlampe kann außerdem auch mit Hilfe anderer Verfahren als Sputtern, beispielsweise mittels Tauchprozesse erzeugt werden.

Tabelle 1: Interferenzfilterbeschichtung an der Lampengefäßkuppe P1 für den Einfallswinkel $\alpha1 = 0$ Grad

| Schicht-Nr. | Art der Schicht | Schichtdicke [nm] |
|---|---|---|
| 1 | $Fe_2O_3$ | 5,4 |
| 2 | $SiO_2$ | 78,9 |
| 3 | $TiO_2$ | 36,8 |
| 4 | $SiO_2$ | 73,5 |
| 5 | $TiO_2$ | 47,5 |
| 6 | $SiO_2$ | 73,5 |
| 7 | $TiO_2$ | 47,5 |
| 8 | $SiO_2$ | 73,5 |
| 9 | $TiO_2$ | 47,5 |
| 10 | $SiO_2$ | 73,5 |
| 11 | $TiO_2$ | 47,5 |
| 12 | $SiO_2$ | 73,5 |
| 13 | $TiO_2$ | 47,5 |
| 14 | $SiO_2$ | 69,9 |
| 15 | $TiO_2$ | 17,9 |
| 16 | $SiO_2$ | 32,3 |
| | | 846,2 |

Die gesamte Schichtdicke d1 des Interferenzfilters an der Lampengefäßkuppe P1 beträgt 846,2 nm. Die Gesamtschichtdicke d1 setzt sich additiv aus den Schichtdicken $d1_i$ zusammen, wobei der Index i die Werte 1 bis 16 durchläuft.

Tabelle 2: Interferenzfilterbeschichtung am Lampengefäßäquator P2 für den Einfallswinkel $\alpha2 = 17$ Grad

| Schicht-Nr. | Art der Schicht | Schichtdicke [nm] |
|---|---|---|
| 1 | $Fe_2O_3$ | 5,4 |
| 2 | $SiO_2$ | 79,8 |
| 3 | $TiO_2$ | 37,2 |
| 4 | $SiO_2$ | 74,4 |
| 5 | $TiO_2$ | 48,1 |
| 6 | $SiO_2$ | 74,4 |

| Schicht-Nr. | Art der Schicht | Schichtdicke [nm] |
|---|---|---|
| | (fortgesetzt) | |
| 7 | $TiO_2$ | 48,1 |
| 8 | $SiO_2$ | 74,4 |
| 9 | $TiO_2$ | 48,1 |
| 10 | $SiO_2$ | 74,4 |
| 11 | $TiO_2$ | 48,1 |
| 12 | $SiO_2$ | 74,4 |
| 13 | $TiO_2$ | 48,1 |
| 14 | $SiO_2$ | 70,8 |
| 15 | $TiO_2$ | 18,2 |
| 16 | $SiO_2$ | 32,7 |
| | | 856,6 |

Die gesamte Schichtdicke d2 des Interferenzfilters am Lampengefäßäquator P2 beträgt 856,6 nm. Das Schichtdickenverhältnis d2/d1 beträgt 1,012. Die Gesamtschichtdicke d2 setzt sich additiv aus den Schichtdicken $d2_i$ zusammen, wobei der Index i die Werte 1 bis 16 durchläuft.

Tabelle 3: Interferenzfilterbeschichtung am sockelnahen Ort P3 für den Einfallswinkel $\alpha 3 = 45$ Grad

| Schicht-Nr. | Art der Schicht | Schichtdicke [nm] |
|---|---|---|
| 1 | $Fe_2O_3$ | 5,8 |
| 2 | $SiO_2$ | 84,5 |
| 3 | $TiO_2$ | 39,3 |
| 4 | $SiO_2$ | 78,7 |
| 5 | $TiO_2$ | 50,9 |
| 6 | $SiO_2$ | 78,7 |
| 7 | $TiO_2$ | 50,9 |
| 8 | $SiO_2$ | 78,7 |
| 9 | $TiO_2$ | 50,9 |
| 10 | $SiO_2$ | 78,7 |
| 11 | $TiO_2$ | 50,9 |
| 12 | $SiO_2$ | 78,7 |
| 13 | $TiO_2$ | 50,9 |
| 14 | $SiO_2$ | 74,9 |
| 15 | $TiO_2$ | 19,2 |
| 16 | $SiO_2$ | 34,5 |
| | | 906,2 |

Die gesamte Schichtdicke d3 des Interferenzfilters am sockelnahen Ort P3 beträgt 906,2 nm. Das Schichtdickenverhältnis d3/d1 beträgt 1,071. Die Gesamtschichtdicke d3 setzt sich additiv aus den Schichtdicken $d3_i$ zusammen, wobei der Index i die Werte 1 bis 16 durchläuft.

**Patentansprüche**

1. Glühlampe für eine Kraftfahrzeug-Signalleuchte, insbesondere für eine Blinklichtleuchte, mit folgenden Merkmalen:

- einem lichtdurchlässigen Lampengefäß (2),
- eine von dem Lampengefäß (2) umschlossene Glühwendel (3),
- einem Interferenzfilter (5), das als Beschichtung mit lokal unterschiedlicher Schichtdicke auf dem Lampengefäß (2) angeordnet ist und als Kantenfilter ausgebildet ist, dessen Filterkante die Spektralbereiche geringer und hoher Transparenz trennt,

**dadurch gekennzeichnet, dass**

das Interferenzfilter, dessen Filterkante in einem Wellenlängenbereich von 520 nm bis 570 nm liegt, mindestens eine $Fe_2O_3$-Absorberschicht aufweist und die Schichtdicke des Interferenzfilters (5) lokal derart variiert, dass jeder von der Glühwendel (3) beleuchtete Ort des interferenzfilterbeschichteten Lampengefäßes (2) Licht emittiert, dessen Farbortkoordinaten x und y gemäß der Normfarbtafel nach DIN 5033 die folgenden Ungleichungen erfüllen:

$$y \geq -x + 0{,}993; \qquad y \geq 0{,}398;$$

$$y \leq 0{,}420$$

**2.** Glühlampe nach Anspruch I, **dadurch gekennzeichnet, dass** die Filterkante für alle Orte des interferenafilterbeschichteten Lampenkolbens (2) im wesentlichen bei der Wellenlänge von 550 nm liegt.

## Claims

**1.** Incandescent lamp for a motor vehicle signal light, in particular for a flashing indicator light, having the following features:

- a light-permeable lamp vessel (2),
- a incandescent spiral-wound filament (3) enclosed by the lamp vessel (2),
- an interference filter (5), disposed on the lamp vessel (2) in the manner of a coating with locally differing layer thickness and configured as an edge filter, the filter edge of which separates the spectral regions of low and high transparency,
**characterised in that**
the interference filter, the filter edge of which is in a wavelength range from 520 nm to 570 nm, has at least one $Fe_2O_3$ absorber layer and the layer thickness of the interference filter (5) varies locally so that each point of the interference-filter-coated lamp vessel (2) illuminated by the incandescent spiral-wound filament (3) emits light, the colour point coordinates x and y of which comply with the following inequalities based on the standard colour table according to DIN 5033:

$$y \geq -x+0.993; \quad y \geq 0.398;$$

$$y \leq 0.420.$$

**2.** Incandescent lamp according to claim 1, **characterised in that** the filter edge is essentially at the wavelength of 550 nm for all the points of the interference-filter-coated lamp piston (2).

## Revendications

**1.** Ampoule pour une lampe témoin de véhicule automobile, en particulier pour un témoin de clignotant, présentant les caractéristiques suivantes :

- un récipient de lampe (2) transparent,
- un filament (3) entouré par le récipient de lampe (2),
- un filtre d'interférence (5), qui est disposé comme revêtement avec une épaisseur de couche différente localement sur le récipient de lampe (2) et est conçu comme filtre à arêtes, dont l'arête de filtre sépare les zones spectrales de faible transparence et de transparence élevée, **caractérisée en ce que**
le filtre d'interférence, dont l'arête de filtre se situe dans une plage de longueurs d'onde de 520 nm à 570 nm, présente au moins une couche absorbante à $Fe_2O_3$ et modifie localement l'épaisseur de couche du filtre d'interférence (5) de telle sorte que chaque endroit, éclairé par le filament (3), du récipient de lampe (2) recouvert du filtre d'interférence émet de la lumière dont les coordonnées du lieu de la couleur x et y répondent conformément au tableau des couleurs standard selon DIN 5033 aux inégalités suivantes :

$$y \geq -x + 0{,}993 \; ; \qquad y \geq 0{,}398 \; ;$$

$$y \leq 0{,}420.$$

2.  Ampoule selon la revendication 1, **caractérisée en ce que** l'arête de filtre se situe pour tous les endroits de l'ampoule de la lampe (2) revêtue du filtre d'interférence sensiblement à proximité de la longueur d'onde de 550 nm.

**FIG. 1**

P1  A  3  2a

P2

α2

2b

P3  4

α3

1

A

FIG. 2

FIG. 3

FIG. 4

ZZ

**EP 0 986 093 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0460913 A
- FR 2626981